# EUROPÄISCHE PATENTSCHRIFT

(11) **EP 1 269 016 B1**
(45) Veröffentlichungstag und Bekanntmachung des Hinweises auf die Patenterteilung: **30.11.2005**
(21) Anmeldenummer: 00912635.0
(22) Anmeldetag: 23.03.2000
(51) Int. Cl.: F03D 11/04, E04H 12/08

(54) **TURM FÜR WINDENERGIEANLAGEN**
TOWER FOR WIND POWER INSTALLATIONS
PYLONE POUR EOLIENNES

(43) Veröffentlichungstag der Anmeldung: 02.01.2003
(73) Patentinhaber: Dewind Technik GmbH, 23569 Lübeck (DE)
(72) Erfinder: SCHIPPMANN, Hugo, L., D-23552 Lübeck (DE); MAACK, Peter, D-23568 Lübeck (DE); SCHNEIDER, Sven, D-42549 Velwert (DE)
(74) Vertreter: Vonnemann, Gerhard
(86) Internationale Anmeldenummer: PCT/EP2000/002558
(87) Internationale Veröffentlichungsnummer: WO 2001/071184

(56) Entgegenhaltungen:
- EP-A- 0 692 629
- DE-A- 3 842 026
- FR-A- 577 547

## Beschreibung

Die Erfindung betrifft einen Turm für Windenergieanlagen, an dem zumindest ein vom Wind antreibbarer Rotor drehbar gelagert werden kann, wobei der Turm mindestens einen sich einen nach oben verjüngenden Turmabschnitt mit bauchiger, im Querschnitt konvexer Außenwand aufweist.

An einen derartigen Turm für eine Windenergieanlage werden bzgl. Stabilität und Steifigkeit hohe Anforderungen gestellt. Der Turm muß nicht nur den Rotor tragen und die auf den Turm selbst und den Rotor bei starkem Wind einwirkende Windlast aufnehmen, sondern er darf auch unter der dynamischen und periodischen Belastung des drehenden Rotors über lange Zeiträume keine Ermündungserscheinungen zeigen. Desweiteren sollten seine Eigenschwingungsfrequenzen möglichst keine Harmonischen der vorherrschenden Rotordrehfrequenz sein, um die Amplituden der Eigenschwingung möglichst klein zu halten.

Viele bekannte Turmkonstruktionen bestehen aus einem Stahlrohr oder mehreren Stahlrohrsegmenten, wobei sich der Turmquerschnitt von unten nach oben linear verjüngt. Die Außenwand des Turms hat dann im wesentlichen die Form eines Kegelmantels, dessen Spitze abgeschnitten ist. Dabei haben die Außenwände im Längsschnitt ein gerades Profil. Aufgrund des nach oben zur Turmspitze hin sich linear verkleinemden Durchmessers wird gegenüber einer zylindrischen Turmform Gewicht eingespart und eine verhältnismäßige gute Stabilität erreicht.

Aus der EP 0 692 629 A1 ist ein gattungsgemäßer Turm bekannt, der aus Stabilitätsgründen nach oben hin kegelstumpfförmig oder konvex verjüngt ist. Aus der FR 577 547 A ist ein Mast für Hochspannungsleitungen bekannt, der nach oben hin mit stetig veränderlichem Winkel konvex verjüngt ist.

Aufgabe der Erfindung ist es, einen Turm für Windenergieanlagen anzugeben, der bei ausreichender Stabilität und Steifigkeit eine möglichst geringe Gesamtmasse aufweist.

Die erfindungsgemäße Lösung dieser Aufgabe sieht vor, dass der Turm zwei sich nach oben verjüngende Turmabschnitte aufweist, wobei ein Turmabschnitt mit im wesentlichen kegelmantelförmiger Außenwand an seiner Oberseite in einen Turmabschnitt mit bauchiger, im Querschnitt konvexer Außenwand übergeht, so dass ein zwischen der Turmachse und einer Normalen auf die Außenwand gebildeter spitzer Winkel im Bereich des unteren Turmabschnitts mit zunehmender Höhe im wesentlichen konstant bleibt und im mittleren Turmabschnitt im wesentlichen stetig kleiner wird. Überraschenderweise hat sich herausgestellt, dass die erfindungsgemäße bauchige Form gegenüber der bekannten geraden Kegelmantelform bei vergleichbarer Stabilität und Steifigkeit eine Gewichtseinsparung von 10-15% der gesamten Turmmasse ermöglicht. Daraus ergeben sich nicht nur Einsparungen bei den Materialkosten, sondern auch bei den Herstellungs- und Montagekosten. Durch die Maßnahme, dass ein zwischen der Turmachse und einer Normalen auf die Außenwand gebildeter spitzer Winkel mit zunehmender Höhe des Bezugspunktes im wesentlichen stetig kleiner wird, erhält man eine mögüchst glatte Außenwand, deren Gewicht im Verhältnis zur Stabilität besonders gering ist.

Wenn der Turm nur abschnittsweise die bauchige Form aufweist, während zumindest ein anderer Turmabschnitt auf herkömmliche Weise kegelmantelförmig ausgebildet ist, lassen sich herkömmliche und besonders günstig zu beschaffende Turmabschnitte mit den bauchigen Turmabschnitten kombinieren, wobei die herkömmlichen Turmabschnitte vorzugsweise dort anzuordnen sind, wo aus einer erfindungsgemäßen Formgebung nur geringfügige Gewichtseinsparungen resultieren würden. Die bauchigen Turmabschnitte sind vorzugsweise in Bereichen mit hohem Einsparungspotential einzuordnen.

In Ausgestaltung der Erfindung wird vorgeschlagen, dass der genannte spitze Winkel im unteren Turmabschnitt etwa 89,6° beträgt und im mittleren Abschnitt von etwa 89,6° auf etwa 87,5° abnimmt.

Weiterhin wird empfohlen, dass bezogen auf eine Turmhöhe von 65 m der Turmdurchmesser am Boden etwa 3,90 m , in 16,4 m Höhe etwa 3,78 m, in 38 m Höhe etwa 3,22 m und in 65 m Höhe etwa 2,15 m beträgt. Ein derartiges Turmprofil führt zu Gewichtseinsparungen von ca. 12%. Selbstverständlich ist das so definierte Turmprofil auch für andere Turmhöhen vorteilhaft. Die Turmdurchmesser müssen dann im Verhältnis zur Turmhöhe vergrößert oder verkleinert werden.

In weiterer Ausgestaltung der Erfindung wird vorgeschlagen, dass der Turm im wesentlichen aus drei Stahlrohrsegmenten besteht, wobei bezogen auf eine Turmhöhe von 65 m ein erstes Turmsegment vom Boden bis in etwa 16,4 m reicht und den kegelmantelförmigen Turmabschnitt bildet, an den sich der konvex-bauchige Turmabschnitt anschließt, der aus einem zweiten Turmsegment von etwa 21,6 m Länge und einem dritten Turmsegment von etwa 27,0 m Länge besteht.

Ein Ausführungsbeispiel der Erfindung wird nachfolgend anhand der Zeichnungen näher erläutert. Die Figuren zeigen im einzelnen:
- Figur 1:: Eine schematische Darstellung einer Windenergieanlage mit Turm und Rotor;
- Figur 2:: Eine schematische Darstellung eines erfindungsgemäßen Turmprofils mit stark gespreizter Darstellung der Breite.

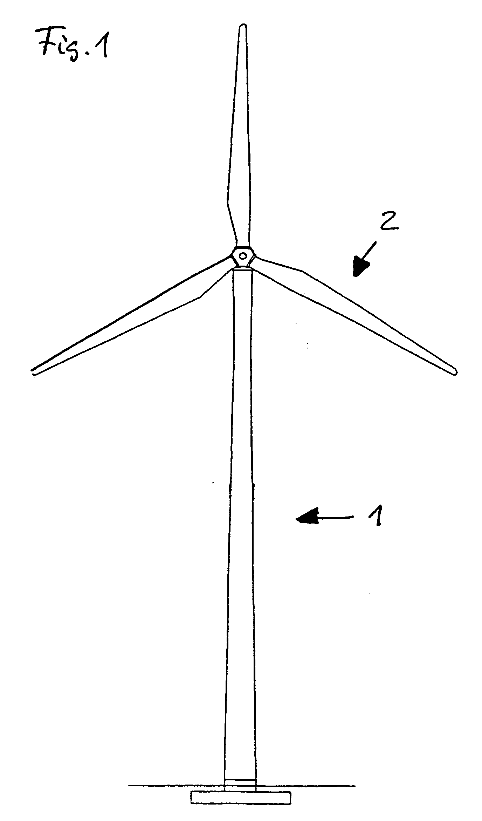

In Figur 1 erkennt man eine Windenergieanlage mit einem Turm 1 und einen vom Wind antreibbaren Rotor 2, der am Turm 1 drehbar gelagert ist.

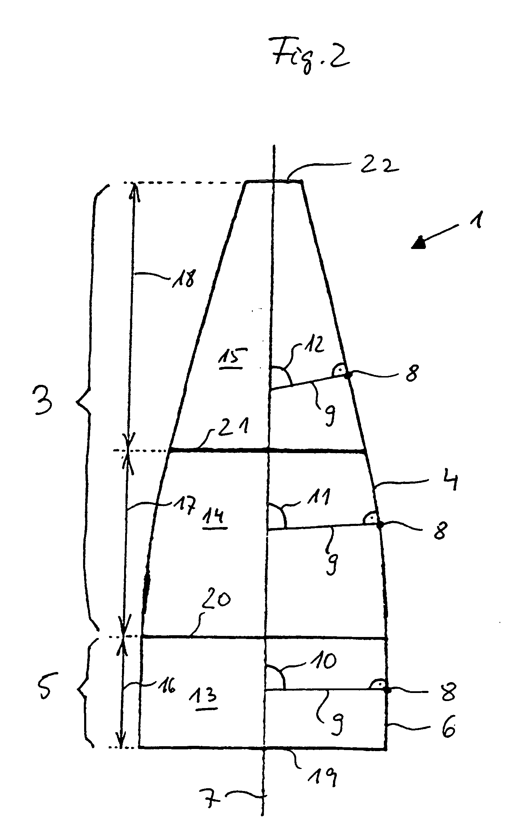

Wie man am besten in der in horizontaler Richtung stark gespreizten Darstellung der Figur 2 erkennt, besitzt der Turm 1 einen sich nach oben hin verjüngenden oberen Turmabschnitt 3, der eine bauchige Außenwand 4 mit im dargestellten Längsschnitt konvexer Form aufweist. Ein unterer Turmabschnitt 5 besitzt eine Außenwand 6, die im wesentlichen kegelmantelförmig ausgebildet ist und sich ebenfalls nach oben hin verjüngt.

Im Bereich des unteren Turmabschnitts 5 ist ein zwischen der Turmachse 7 und einer durch einen Bezugspunkt 8 auf der Außenwand 6 verlaufenden Normalen 9 auf die Außenwand 6 gebildeter spitzer Winkel 10 mit zunehmender Höhe des Bezugspunktes 8 im wesentlichen gleichgroß.

Im Bereich des bauchigen Turmabschnitts 3 hingegen wird der spitze Winkel 11, 12 zwischen der Turmachse 7 und der durch einen Bezugspunkt 8 auf der Außenwand 4 verlaufenden Normalen 9 mit zunehmender Höhe des Bezugspunktes 8 stetig kleiner.

Während der spitze Winkel 10 im unteren Turmabschnitt 5 beim gezeigten Ausführungsbeispiel etwa 89,6° beträgt, haben die spitzen Winkel 11, 12 am Übergang zwischen dem unteren Turmabschnitt 5 und dem oberen Turmabschnitt 3 ebenfalls Werte von 89,6°, die nach oben hin im Bereich des eingezeichneten Winkels 11 zunächst stark und im weiteren Verlauf im Bereich des eingezeichneten Winkels 12 schwächer abnehmen, bis der spitze Winkel in der Nähe der Befestigungsstelle für den Rotor 2 Werte von etwa 87,5° erreicht.

Der Turm 1 setzt sich aus drei Turmsegmenten 13, 14, 15 zusammen, von denen ein erstes Turmsegment 13 vom Boden 19 ausgehend eine Höhe 16 von 16,4 m erreicht und den kegelmantelförmigen Turmabschnitt 5 bildet. Der bauchige obere Turmabschnitt 3 wird von einem zweiten Turmsegment mit einer Höhe 17 von 21,6 m und einem darauf aufbauenden dritten Turmsegment 15 mit einer Höhe 18 von 27,0 m gebildet. Der Turm 1 erreicht somit eine Gesamthöhe von etwa 65 m.

Im Bereich der Unterseite 19 des ersten Turmsegments hat der Turm 1 einen Durchmesser von 3,90 m, im Übergangsbereich zwischen erstem Turmsegment 13 und zweitem Turmsegment 14, in 16,4 m Höhe 20 über dem Boden 19 hat der Turm 1 einen Durchmesser von 3,78 m. Im nächsten Übergangsbereich zwischen dem zweiten Turmsegment 14 und dem dritten Turmsegment 15, in etwa 38 m Höhe 21 hat der Turm 1 einen Durchmesser von 3,22 m. An der Oberseite 22 des dritten Turmsegments 15, in etwa 65 m Höhe erreicht der Turm 1 schließlich einen Durchmesser von 2,15 m.

Das Gewicht des erfindungsgemäßen bauchigen Turms 1 beträgt bei dem beschriebenen Ausführungsbeispiel ungefähr 68 t. Demgegenüber würde ein herkömmlicher Turm mit konstantem Konuswinkel bei gleicher Belastbarkeit eine Masse von deutlich mehr als 77 t aufweisen.

### Bezugszeichenliste

- 1: Turm
- 2: Rotor
- 3: oberer Turmabschnitt
- 4: Außenwand
- 5: unterer Turmabschnitt
- 6: Außenwand
- 7: Turmachse
- 8: Bezugspunkt
- 9: Normale
- 10: spitzer Winkel
- 11: spitzer Winkel
- 12: spitzer Winkel
- 13: erstes Turmsegment
- 14: zweites Turmsegment
- 15: drittes Turmsegment
- 16: Höhe
- 17: Höhe
- 18: Höhe
- 19: Unterseite / Boden
- 20: Höhe
- 21: Höhe
- 22: Oberseite / Höhe

## Patentansprüche

1. Turm für Windenergieanlagen, an dem zumindest ein vom Wind antreibbarer Rotor (2) drehbar gelagert werden kann, wobei der Turm (1) mindestens einen sich nach oben hin verjüngenden Turmabschnitt (3) mit bauchiger, im Längsschnitt konvexer Außenwand (4) aufweist, **dadurch gekennzeichnet, dass** der Turm (1) zwei sich nach oben verjüngende Turmabschnitte (3, 5) aufweist, wobei ein unterer Turmabschnitt (5) mit im wesentlichen kegelmantelförmiger Außenwand (6) an seiner Oberseite (20) in seinem Turmabschnitt (3) mit bauchiger, im Längsschnitt konvexer Außenwand (4) übergeht, so dass ein zwischen der Turmachse (7) und einer Normalen (9) auf die Außenwand (8) gebildeter spitzer Winkel (10, 11, 12) im Bereich des unteren Turmabschnitts (5) mit zunehmender Höhe im wesentlichen konstant bleibt und im oberen Turmabschnitt im wesentlichen stetig kleiner wird.

2. Turm nach Anspruch 1, **dadurch gekennzeichnet, dass** der genannte spitze Winkel (10, 11, 12) im unteren Turmabschnitt (5) etwa 89,6° beträgt und im oberen Turmabschnitt (3) von etwa 89,6° auf etwa 87,5° abnimmt.

3. Turm nach Anspruch 2, **dadurch gekennzeichnet, dass**, bezogen auf eine Turmhöhe von 65 m, der Turmdurchmesser am Boden (19) etwa 3,90 m, in 16,4 m Höhe (20) etwa 3,78 m, in 38 m Höhe (21) etwa 3,22 m und in 65 m Höhe (22) etwa 2,15 m beträgt.

4. Turm nach einem der vorhergehenden Ansprüche, **dadurch gekennzeichnet, daß** der Turm im wesentlichen aus Stahlrohrsegmenten (13, 14, 15) besteht, wobei bezogen auf eine Turmhöhe von 65 m ein erstes Turmsegment (13) vom Boden (19) bis in etwa 16,4 m Höhe (20) reicht und den kegelmantelförmigen Turmabschnitt(5) bildet, an den sich der konvex bauchige Turmabschnitt (3) anschließt, der seinerseits aus einem zweiten Turmsegment (14) von etwa 21,6 m Höhe (17) und einem dritten Turmsegment (15) von etwa 27,0 m Höhe (18) besteht.

## Claims

1. A tower for wind energy plants, on which at least one rotor (2) drivable by wind may be rotatably mounted, wherein the tower (1) comprises at least one tower section (3) tapering upwards with a bulbous outer wall (4) which in the longitudinal section is convex, **characterised in that** the tower (1) comprises two tower sections (3, 5) tapering upwards, wherein a lower tower section (5) merges with an essentially cone-shell-shaped outer wall (6) on its upper side (20) into its tower section (3) with the bulbous outer wall (4) which is convex in the longitudinal section, so that an acute angle (10, 11, 12) formed between the tower axis (7) and a normal (9) onto the outer wall (8), in the region of the lower tower section (5) remains essentially constant with an increasing height, and in the upper tower section essentially becomes constantly smaller.

2. A tower according to claim 1, **characterised in that** the mentioned acute angle (10, 11, 12) in the lower tower section (5) is about 89.6 ° and in the upper tower section (3) reduces from about 89.6° to about 87.5°.

3. A tower according to claim 2, **characterised in that** with respect to a tower height of 65 m, the tower diameter on the ground (19) is about 3.90 m, at a height (20) of 16.4 m is about 3.78 m, at a height (21) of 38 m is about 3.22 m and an a height (22) of 65 m is about 2.15 m.

4. A tower according to one of the preceding claims, **characterised in that** the tower consists essentially of steel tube segments (13, 14, 15), wherein with respect to a tower height of 65 m, a first tower segment (13) reaches from the ground (19) up to about 16.4 m height (20) and forms the cone-shell-shaped tower section (5) to which the convexly bulbous tower section (3) connects which for its part consists of a second tower section (14) of about 21.6 m height (17) and of a third tower segment (15) of about 27.0 m height (18).

## Revendications

1. Pylône pour éoliennes, sur lequel au moins un rotor (2) entraîné par le vent peut être logé en rotation, le pylône (1) présentant au moins une partie de pylône (3) se rétrécissant vers le haut avec une paroi extérieure (4) bombée convexe en coupe longitudinale,
**caractérisé en ce que** le pylône (1) présente deux parties de pylône (3, 5) se rétrécissant vers le haut, une partie de pylône inférieure (5) avec une paroi extérieure (6) pour l'essentiel en forme d'aire latérale de cône passe à sa face supérieur (20) dans sa partie de pylône (3) avec une paroi extérieure (4) bombée convexe en coupe longitudinale, de telle sorte qu'un angle aigu (10, 11, 12) formé entre l'axe de pylône (7) et une normale (9) sur la paroi extérieure (8) reste pour l'essentiel constant sur la hauteur croissante dans la zone de la partie de pylône inférieure (5) et se réduit pour l'essentiel constamment dans la partie de pylône supérieure.

2. Pylône selon la revendication 1,
**caractérisé en ce que** l'angle aigu cité (10, 11, 12) est de 89,6° environ dans la partie de pylône inférieure (5) et se réduit de 89, 6° environ à 87,5° environ dans la partie de pylône supérieure (3).

3. Pylône selon la revendication 2,
**caractérisé en ce que** par rapport à une hauteur de pylône de 65 m le diamètre du pylône au sol (19) est de 3,90 m environ, à une hauteur (20) de 16,4 m de 3,78 m environ, à une hauteur (21) de 38 m de 3,22 m environ et à une hauteur (22) de 65 m de 2, 15 m environ.

4. Pylône selon l'une quelconque des revendications précédentes,
**caractérisé en ce que** le pylône est réalisé pour l'essentiel à partir de segments de tubes d'acier (13, 14, 15), et par rapport à une hauteur de pylône de 65 m un premier segment de pylône (13) s'étend du sol (19) jusqu'à une hauteur (20) de 16,4 m et forme la partie de pylône (5) en forme d'aire latérale de cône, qui est suivie par la partie de pylône (3) convexe bombée, qui de son côté est composée d'un deuxième segment de pylône (14) d'une hauteur (17) de 21,6 m environ et d'un troisième segment de pylône (15) d'une hauteur (18) de 27,0 m environ.
